# EUROPÄISCHE PATENTSCHRIFT

(11) **EP 4 605 150 B1**
(45) Veröffentlichungstag und Bekanntmachung des Hinweises auf die Patenterteilung: **02.12.2026**
(21) Anmeldenummer: 23793257.9
(22) Anmeldetag: 16.10.2023
(51) Int. Cl.: B21C 47/16, B21C 51/00, B21D 43/28, B23K 26/08

(54) **MASCHINELLE ANORDNUNG UND VERFAHREN ZUR BEARBEITUNG EINES VON EINEM COIL ABGEWICKELTEN BLECHBANDS**
MECHANICAL ARRANGEMENT AND METHOD FOR PROCESSING A SHEET-METAL STRIP UNWOUND FROM A COIL
AGENCEMENT MÉCANIQUE ET PROCÉDÉ DE TRAITEMENT D'UNE BANDE DE TÔLE DÉROULÉE D'UNE BOBINE

(30) Priorität: 18.10.2022 DE 102022127171
(43) Veröffentlichungstag der Anmeldung: 27.08.2025
(73) Patentinhaber: TRUMPF Werkzeugmaschinen SE + Co. KG, 71254 Ditzingen (DE)
(72) Erfinder: WOWTSCHERK, Patrick, 02699 Neschwitz (DE); GNAUCK, Konrad, 01904 Neukirch (DE); WOWTSCHERK, Markus, 01920 Ralbitz-Rosenthal (DE)
(74) Vertreter: Trumpf Patentabteilung
(86) Internationale Anmeldenummer: PCT/EP2023/078652
(87) Internationale Veröffentlichungsnummer: WO 2024/083731

(56) Entgegenhaltungen:
- EP-A1- 1 586 407
- EP-B1- 1 402 986
- WO-A1-02/43886
- WO-A1-2009/105608
- WO-A1-2019/215044
- DE-A1- 102014 114 367
- DE-U1- 20 105 804
- DE-U1- 20 300 623
- JP-A- H09 314 365
- US-A- 3 716 773

## Beschreibung

Die Erfindung betrifft eine maschinelle Anordnung zur Bearbeitung eines von einem Coil abgewickelten Blechbands,
- mit einer Vorschubvorrichtung, mittels derer das von dem Coil abgewickelte Blechband in einer von dem Coil weg weisenden Vorschubrichtung in einer Längsrichtung des Blechbands bewegbar ist und welche dem Coil in der Vorschubrichtung nachgeordnet ist sowie
- mit einer dem Coil in der Vorschubrichtung des von dem Coil abgewickelten Blechbands nachgeordneten Bearbeitungsvorrichtung, welcher das von dem Coil abgewickelte Blechband mittels der Vorschubvorrichtung mit einer Bewegung des Blechbands in der Vorschubrichtung zuführbar ist und welche ausgebildet ist zur Bearbeitung des von dem Coil abgewickelten Blechbands über eine definierte Bearbeitungslänge des Blechbands,
- wobei in der Vorschubrichtung zwischen dem Coil und der Bearbeitungsvorrichtung an der dem Coil zugewandten Seite der Vorschubvorrichtung eine von einer betätigbaren Trennvorrichtung ausgebildete Trennstelle vorgesehen ist, die von dem von dem Coil abgewickelten und mittels der Vorschubvorrichtung in der Vorschubrichtung bewegten Blechband zu der Bearbeitungsvorrichtung hin passierbar ist und an welcher das von dem Coil abgewickelte Blechband durch Betätigen der Trennvorrichtung trennbar ist.

Die Erfindung betrifft außerdem ein mit der vorstehenden maschinellen Anordnung durchführbares Verfahren zur Bearbeitung eines von einem Coil abgewickelten Blechbands.

Gattungsgemäßer Stand der Technik ist bekannt aus WO 2009/105608 A1. Der gattungsgemäße Stand der Technik betrifft eine maschinelle Anordnung zur trennenden Laserbearbeitung eines von einem Coil abgewickelten Bandmaterials. Zum Abwickeln des Bandmaterials von dem Coil und zum Transfer des abgewickelten Bandmaterials zu einer Laserbearbeitungsstation der maschinellen Anordnung ist ein Treibrollenpaar vorgesehen, welches das Bandmaterial an der Ober- und an der Unterseite beaufschlagt. In der Bewegungsrichtung zwischen dem Coil und der Laserbearbeitungsstation durchläuft das Bandmaterial eine Trennschere.

Weiterer Stand der Technik ist bekannt aus DE 201 05 804 U1. Diese Druckschrift offenbart eine Anlage für die trennende Bearbeitung von Bandmaterial, das vor der Bearbeitung von einem Coil abgewickelt wird. Das von dem Coil abgewickelte Bandmaterial wird mittels einer Förderstation zunächst durch eine Richtstation bewegt, die zwischen dem Coil und der Förderstation angeordnet ist. Das gerichtete Bandmaterial bewegt die Fördervorrichtung dann zu einer Bearbeitungsstation, an welcher das Bandmaterial mittels einer Plasma- oder einer Laserschneidvorrichtung trennend bearbeitet wird.

Ausgehend von dem gattungsgemäßen Stand der Technik besteht die Aufgabe der vorliegenden Erfindung darin, bei einer Blechbearbeitung vom Coil Bearbeitungsabfall möglichst weitgehend zu vermeiden.

Erfindungsgemäß gelöst wird diese Aufgabe durch die maschinelle Anordnung nach Patentanspruch 1 und durch das maschinelle Verfahren nach Patentanspruch 9.

Im Falle der Erfindung wird der Bearbeitungsvorrichtung der maschinellen Anordnung exakt oder zumindest in sehr guter Näherung diejenige Länge an Blechband zugeführt, die in dem betreffenden Fall zu bearbeiten ist. Die Erfindung bewährt sich insbesondere in Fällen, in denen an einer maschinellen Anordnung für die Blechbearbeitung vom Coil nacheinander Blechbänder mit unterschiedlicher Beschaffenheit zu bearbeiten sind und in denen bei einer Bearbeitung, die einer weiteren Bearbeitung vorausgeht, das Coil nicht vollständig abgearbeitet wird. Am Ende der ersten Bearbeitung muss dann das von dem Coil abgewickelte Blechband gekappt werden, ehe das teilweise abgearbeitete Coil durch das Coil für die anschließende Bearbeitung ersetzt werden kann. Eine nach der ersten Bearbeitung verbleibende Restlänge des von dem betreffenden Coil bereits abgewickelten Blechbands ist für die unmittelbar nachfolgende Bearbeitung in aller Regel unbrauchbar. Im Falle der Erfindung wird die unbrauchbare Blechband-Restlänge minimiert und Bearbeitungsabfall dadurch weitgehend vermieden.

Als Bearbeitungsvorrichtung kann die erfindungsgemäße maschinelle Anordnung insbesondere eine Trennvorrichtung, vorzugsweise eine Laser-Trennvorrichtung, aufweisen. Als Vorschubvorrichtung der erfindungsgemäßen maschinellen Anordnung ist ein Blechbandantrieb üblicher Bauart denkbar, beispielsweise eine Vorschubstation mit das zu bewegende Blechband beaufschlagenden Treibrollen und/oder eine in der Vorschubrichtung angetriebene Werkstückauflage für das Blechband an der Bearbeitungsvorrichtung.

Besondere Ausführungsarten der Erfindung nach den unabhängigen Patentansprüchen 1 und 9 ergeben sich aus den abhängigen Patentansprüchen 2 bis 8.

Im Falle der Erfindungsbauart gemäß Patentanspruch 2 wird vorteilhafterweise vermieden, dass das freie Ende des nach dem Trennen des Blechbands verbleibenden Restcoils Spuren einer mechanischen Beanspruchung aufweist. Mechanisch beansprucht wird ein Blechband beispielsweise an einer in der Vorschubrichtung des Blechbands auf das Coil folgenden Richtstation.

Ausweislich Patentanspruch 3 ist in bevorzugter Ausgestaltung der Erfindung die Trennstelle der Trennvorrichtung dem Coil in der Vorschubrichtung unmittelbar nachgeordnet und somit sehr nahe an dem Coil positioniert. Aufgrund der erfindungsgemäßen Anordnung der Trennstelle verbleibt nach dem Abtrennen der Bearbeitungslänge des Blechbands coilseitig eine nur kurze von dem Restcoil abgewickelte Bandlänge. Diese freie Bandlänge ist einfach zu handhaben und kann folglich mit geringem Aufwand wieder auf dem Restcoil aufgewickelt werden. Insbesondere entfällt aufgrund der coilnahen Anordnung der Trennstelle der Trennvorrichtung die Notwendigkeit, das freie Ende des Restcoils von weiteren Funktionseinheiten der maschinellen Anordnung, beispielsweise von einer Richtstation, zurückzuziehen und eine damit möglicherweise verbundene mechanische Beanspruchung des freien Endes des Restcoils in Kauf zu nehmen.

Eine vorzugsweise maschinelle Fixiervorrichtung, beispielsweise ein maschineller Fixierarm, dient in Weiterbildung der Erfindung dazu, ein nach dem Abtrennen der Bearbeitungslänge von dem verbliebenen Restcoil abstehendes Ende des aufgewickelten Blechbands an das Restcoil anzulegen (Patentanspruch 4).

Als Trennvorrichtung der erfindungsgemäßen Anordnung kommen unterschiedliche Vorrichtungsbauarten in Frage. Generell wird die Trennstelle durch das Trennwerkzeug der Trennvorrichtung definiert. Gemäß Patentanspruch 5 wird als Trennvorrichtung eine maschinelle Trennschere bevorzugt. Die Schneiden der maschinellen Trennschere bilden die Trennstelle aus, an welcher die Bearbeitungslänge des von dem Coil abgewickelten Blechbands abgetrennt wird. Ausweislich Patentanspruch 6 wird in weiterer bevorzugter Ausgestaltung der Erfindung die trennende Bearbeitung des Blechbands durch die coilnahe Trennvorrichtung der Einfachheit halber an dem ruhenden Blechband durchgeführt.

Vorteilhafterweise kann im Falle eines entsprechenden Bearbeitungsauftrags die Bearbeitungslänge des von dem Coil abgewickelten Blechbands von der Bearbeitungsvorrichtung abschnittweise und dementsprechend in Arbeitstakten abgearbeitet werden (Patentanspruch 7). Die Bearbeitungslänge des Blechband wird dann mittels der Vorschubvorrichtung abschnittweise in den Arbeitsbereich der Bearbeitungsvorrichtung bewegt. Die coilnahe Trennvorrichtung der erfindungsgemäßen maschinellen Anordnung wird in diesem Fall zum Abtrennen der Bearbeitungslänge des Blechbands betätigt, sobald die Vergleichsvorrichtung der maschinellen Anordnung festgestellt hat, dass mittels der Messvorrichtung als Summe der Längen der Bandabschnitte, mit welchen das Blechband die Trennstelle der Trennvorrichtung in der Vorschubrichtung zu der Bearbeitungsvorrichtung hin passiert hat, die Bearbeitungslänge gemessen worden ist.

Im Falle einer weiteren bevorzugten Bauart der erfindungsgemäßen maschinellen Anordnung werden alle wesentlichen Funktionen der maschinellen Anordnung von einer numerischen Anordnungssteuerung gesteuert (Patentanspruch 8). Nachfolgend wird die Erfindung anhand einer beispielhaften schematischen Darstellung einer erfindungsgemäßen maschinellen Anordnung näher erläutert, die zur trennenden Blechbearbeitung vom Coil ausgebildet ist.

Es zeigen:
Fig: 1 eine maschinelle Anordnung und

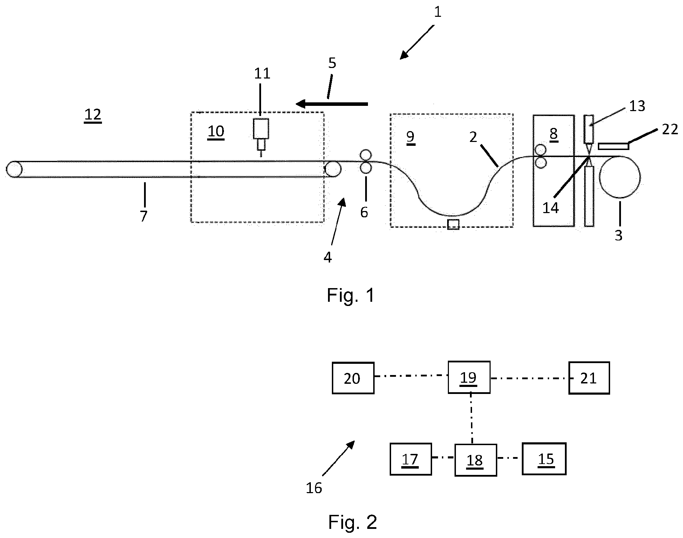

Fig. 2 eine numerische Anordnungssteuerung.

Die in Fig. 1 gezeigte maschinelle Anordnung 1 dient zur Bearbeitung eines Blechbands 2, das im Ausgangszustand in Form eines Coils 3 auf einer herkömmlichen Haspel aufgewickelt ist. Mittels einer Vorschubvorrichtung 4 wird das Blechband 2 von dem Coil 3 abgewickelt und in einer Vorschubrichtung 5 bewegt. Die Vorschubvorrichtung 4 umfasst ein Treibrollenpaar 6, dessen Treibrollen das Blechband 2 an einander gegenüberliegenden Seiten beaufschlagen sowie ein endlos umlaufendes Blech-auflageband 7, dessen Obertrum in der Vorschubrichtung 5 angetrieben werden kann.

Nach dem Abwickeln von dem Coil 3 gelangt das Blechband 2 zu einer als Richtvorrichtung 8 ausgebildeten Funktionseinheit der maschinellen Anordnung 1. In der Richtvorrichtung 8 wird das Blechband 2 einem Richtvorgang unterzogen.

Das nach dem Richtvorgang ebene Blechband 2 durchläuft bei seiner weiteren Bewegung in der Vorschubrichtung 5 einen Bandspeicher 9, ehe es nach dem Passieren des Treibrollenpaars 6 der Vorschubvorrichtung 4 in einen Arbeitsbereich 10 einer in dem dargestellten Beispielsfall als Lasertrennvorrichtung 11 ausgebildeten Bearbeitungsvorrichtung gelangt.

Nach dem Passieren des Treibrollenpaars 6 der Vorschubvorrichtung 4 ist das Blechband 2 auf dem Blechauflageband 7 gelagert.

In dem Arbeitsbereich 10 der maschinellen Anordnung 1 wird das Blechband 2 in bekannter Weise trennend bearbeitet. Die Vorschubvorrichtung 4 ist während der Bearbeitung des Blechbands 2 durch die Lasertrennvorrichtung 11 stillgesetzt und die Lasertrennvorrichtung 11 wird mit einer in einer horizontalen Ebene zweiachsigen Arbeitsbewegung über das ruhende Blechband 2 bewegt. Dabei wird das Blechband 2 unter Erzeugung von Fertigteilen und eines die Fertigteile umgebenden Restgitters trennend bearbeitet.

Nach Beendigung der Bearbeitung in dem Arbeitsbereich 10 wird die Vorschubvorrichtung 4 wieder eingeschaltet und die Fertigteile und das Restgitter gelangen in einen in der Vorschubrichtung 5 auf den Arbeitsbereich 10 folgenden Entladebereich 12. Dort werden die zuvor erzeugten Fertigteile und das zuvor erzeugte Restgitter mittels einer der Einfachheit halber nicht dargestellten Entladevorrichtung von dem Blechauflageband 7 entladen.

In dem dargestellten Beispielsfall ist mittels der maschinellen Anordnung 1 eine Bearbeitungsaufgabe zu erledigen, im Falle derer das Blechband 2 über eine definierte Bearbeitungslänge trennend zu bearbeiten ist, die größer ist als die in dem Arbeitsbereich 10 der maschinellen Anordnung 1 in Bandlängsrichtung bestehende Reichweite der Lasertrennvorrichtung 11.

Aufgrund dieser Rahmenbedingungen wird das Blechband 2 nach dem Abwickeln von dem Coil 3 dem Arbeitsbereich 10 beziehungsweise der Lasertrennvorrichtung 11 taktweise und dabei mit Bandabschnitten zugeführt, deren Erstreckung in Bandlängsrichtung auf die in dieser Richtung bestehende Reichweite der Laser-Trennvorrichtung 11 abgestimmt ist.

Zur Vermeidung von Bearbeitungsabfall wird der Lasertrennvorrichtung 11 exakt die definierte Bearbeitungslänge des Blechbands 2 zugeführt.

Zu diesem Zweck ist in der Vorschubrichtung 5 zwischen dem Coil 3 und der Vorschubvorrichtung 4 eine Trennvorrichtung in Form einer Trennschere 13 angeordnet, die mittels Ihrer Schneiden eine Trennstelle 14 definiert.

An der Trennstelle 14 ist eine Messvorrichtung 15 vorgesehen, die als Messeinheit in eine numerische Anordnungssteuerung 16 integriert ist. Mittels der numerischen Anordnungssteuerung 16 werden alle wesentlichen Funktionen der maschinellen Anordnung 1 gesteuert.

In einem in Fig. 2 gezeigtem programmierbaren Speicher 17 der numerischen Anordnungssteuerung 16 ist die Bearbeitungslänge des Blechbands 2 für die jeweilige Bearbeitungsaufgabe hinterlegt. Mittels der Messvorrichtung 15 wird eine momentane Bandlänge des Blechbands 2 gemessen, mit welcher das Blechband 2 zu dem jeweiligen Messzeitpunkt die Trennstelle 14 der Trennschere 13 zu der Bearbeitungsvorrichtung 4 hin passiert hat. In dem dargestellten Beispielsfall wird die momentane Bandlänge des Blechbands 2 von der Messvorrichtung 15 als momentane Summe der Längen der Bandabschnitte gemessen, welche die Trennstelle 14 beim Vortakten des Blechbands 2 in der Vorschubrichtung 5 passiert haben.

Mit der Messvorrichtung 15 und mit dem Speicher 17 ist eine als Vergleichsvorrichtung vorgesehene Vergleichseinheit 18 der numerischen Anordnungssteuerung 16 verbunden. Mittels der Vergleichseinheit 18 wird fortlaufend die von der Messvorrichtung 15 gemessene momentane Bandlänge des Blechbands 2 mit der Bearbeitungslänge des Blechbands 2 verglichen. Stellt die Vergleichseinheit 18 fest, dass die momentane Bandlänge mit der Bearbeitungslänge des Blechbands 2 übereinstimmt, werden mittels einer als Schaltvorrichtung vorgesehenen Steuereinheit 19 der numerischen Anordnungssteuerung 16 ein Schaltsignal für einen Vorschubantrieb 20 der Vorschubvorrichtung 4 und ein Schaltsignal für einen Trennantrieb 21 der Trennschere 13 generiert.

Aufgrund des Schaltsignals für den Vorschubantrieb 20 wird die Bewegung des Blechbands 2 in der Vorschubrichtung 5 durch Stillsetzen der Antriebe für das Treibrollenpaar 6 und für das Blechauflageband 7 abgebrochen. Mit Eintreten des Bandstillstands wird die Trennschere 13 aufgrund des Schaltsignals für den Trennantrieb 21 betätigt und das Blechband 2 wird an der Trennstelle 14 der Trennschere 13 getrennt.

Infolge des Trennens des Blechbands 2 an der Trennschere 13 bildet sich an der dem Coil 3 zugewandten Seite der Trennstelle 14 ein freies Blechbandende aus, welches von dem restlichen Coil 3 absteht. Dieses freie Blechbandende wird mittels einer Fixiervorrichtung in Form eines herkömmlichen Anlegearms 22 an das verbliebene Coil 3 angelegt. Anschließend kann das Coil 3 erforderlichenfalls für einen nachfolgenden Bearbeitungsgang durch ein anderes Coil ersetzt werden.

## Patentansprüche

1. Maschinelle Anordnung zur Bearbeitung eines von einem Coil (3) abgewickelten Blechbands (2),
• mit einer Vorschubvorrichtung (4), mittels derer das von dem Coil (3) abgewickelte Blechband (2) in einer von dem Coil (3) weg weisenden Vorschubrichtung (5) in einer Längsrichtung des Blechbands (2) bewegbar ist und welche dem Coil (3) in der Vorschubrichtung (5) nachgeordnet ist sowie
• mit einer dem Coil (3) in der Vorschubrichtung (5) des von dem Coil (3) abgewickelten Blechbands (2) nachgeordneten Bearbeitungsvorrichtung (11), welcher das von dem Coil (3) abgewickelte Blechband (2) mittels der Vorschubvorrichtung (4) mit einer Bewegung des Blechbands (2) in der Vorschubrichtung (5) zuführbar ist und welche ausgebildet ist zur Bearbeitung des von dem Coil (3) abgewickelten Blechbands (2) über eine definierte Bearbeitungslänge des Blechbands (2),
• wobei in der Vorschubrichtung (5) zwischen dem Coil (3) und der Bearbeitungsvorrichtung (11) an der dem Coil (3) zugewandten Seite der Vorschubvorrichtung (4) eine von einer betätigbaren Trennvorrichtung (13) ausgebildete Trennstelle (14) vorgesehen ist, die von dem von dem Coil (3) abgewickelten und mittels der Vorschubvorrichtung (4) in der Vorschubrichtung (5) bewegten Blechband (2) zu der Bearbeitungsvorrichtung (11) hin passierbar ist und an welcher das von dem Coil (3) abgewickelte Blechband (2) durch Betätigen der Trennvorrichtung (13) trennbar ist,
**dadurch gekennzeichnet,**
• **dass** eine Messvorrichtung (15) vorgesehen ist, mittels derer fortlaufend eine momentane Bandlänge des Blechbands (2) messbar ist, mit welcher das Blechband (2) zu dem jeweiligen Messzeitpunkt die Trennstelle (14) der Trennvorrichtung (13) zu der Bearbeitungsvorrichtung (11) hin passiert hat,
• **dass** eine Vergleichsvorrichtung (18) vorgesehen ist, mittels derer fortlaufend die momentane Bandlänge des Blechbands (2) mit der Bearbeitungslänge des Blechbands (2) vergleichbar ist und
• **dass** die Trennvorrichtung (13) zum Trennen des Blechbands (2) betätigbar und dadurch das Blechband (2) an der Trennstelle trennbar ist, sobald die Vergleichsvorrichtung (18) eine Übereinstimmung der momentanen Bandlänge des Blechbands (2) mit der Bearbeitungslänge des Blechbands (2) festgestellt hat.

2. Maschinelle Anordnung nach Anspruch **1, dadurch gekennzeichnet,**
• **dass** in der Vorschubrichtung (5) zwischen dem Coil (3) und der Bearbeitungsvorrichtung (11) eine Funktionseinheit (8) der maschinellen Anordnung vorgesehen ist, welche das in der Vorschubrichtung (5) bewegte Blechband (2) mechanisch beansprucht und
• **dass** die Trennstelle (14) der Trennvorrichtung (13) in der Vorschubrichtung zwischen dem Coil (3) und der das Blechband (2) mechanisch beanspruchenden Funktionseinheit (8) der maschinellen Anordnung vorgesehen ist.

3. Maschinelle Anordnung nach einem der vorhergehenden Ansprüche, **dadurch gekennzeichnet, dass** die Trennstelle (14) der Trennvorrichtung (13) dem Coil (3) in der Vorschubrichtung (5) unmittelbar nachgeordnet ist.

4. Maschinelle Anordnung nach einem der vorhergehenden Ansprüche, **dadurch gekennzeichnet, dass** eine Fixiervorrichtung (22) vorgesehen ist, mittels derer nach dem Trennen des Blechbands (2) coilseitig ein von einem verbliebenen Coil abstehendes Ende des Blechbands (2) an das verbliebene Coil anlegbar ist.

5. Maschinelle Anordnung nach einem der vorhergehenden Ansprüche, **dadurch gekennzeichnet, dass** als Trennvorrichtung (13) eine Trennschere vorgesehen ist.

6. Maschinelle Anordnung nach einem der vorhergehenden Ansprüche, **dadurch gekennzeichnet,**
• **dass** die Vorschubvorrichtung (4) durch Betätigen einer Schaltvorrichtung (19) schaltbar ist und
• **dass** die Vorschubvorrichtung (4) durch Betätigen der Schaltvorrichtung (19) stillsetzbar ist, sobald die Vergleichsvorrichtung (18) eine Übereinstimmung der momentanen Bandlänge des Blechbands (2) mit der Bearbeitungslänge des Blechbands (2) festgestellt hat und ehe die Trennvorrichtung (13) zum Trennen des Blechbands (2) betätigt wird.

7. Maschinelle Anordnung nach einem der vorhergehenden Ansprüche, **dadurch gekennzeichnet,**
• **dass** die Bearbeitungslänge des Blechbands (2) der Bearbeitungsvorrichtung (11) mittels der Vorschubvorrichtung (4) abschnittweise als Bandabschnitte zuführbar ist und
• **dass** mittels der Messvorrichtung (15) fortlaufend die momentane Bandlänge des Blechbands (2) als momentane Summe der Längen der Bandabschnitte messbar ist, mit welchen das Blechband (2) zu dem jeweiligen Messzeitpunkt die Trennstelle (14) der Trennvorrichtung (13) in der Vorschubrichtung (5) zu der Bearbeitungsvorrichtung (11) hin passiert hat.

8. Maschinelle Anordnung nach einem der vorhergehenden Ansprüche, **dadurch gekennzeichnet, dass** eine programmierbare numerische Anordnungssteuerung (16) vorgesehen ist, in welcher die Bearbeitungslänge des Blechbands (2) vorzugsweise variabel hinterlegt ist und die aufweist:
• eine als Messvorrichtung (15) vorgesehene Messeinheit mittels derer fortlaufend die momentane Bandlänge des Blechbands (2) zu dem jeweiligen Messzeitpunkt messbar ist,
• eine als Vergleichsvorrichtung (18) vorgesehene und mit der Messeinheit verbundene Vergleichseinheit, die auf die in der numerischen Anordnungssteuerung (1) hinterlegte Bearbeitungslänge des Blechbands (2) Zugriff hat und mittels derer fortlaufend die momentane Bandlänge des Blechbands (2) mit der Bearbeitungslänge des Blechbands (2) vergleichbar ist und
• eine mit der Vergleichseinheit verbundene Steuereinheit (19), mittels derer die Trennvorrichtung (13) zum Trennen des Blechbands (2) betätigbar ist, sobald die Vergleichseinheit eine Übereinstimmung der momentanen Bandlänge des Blechbands (2) mit der Bearbeitungslänge des Blechbands (2) festgestellt hat.

9. Verfahren zur Bearbeitung eines von einem Coil (3) abgewickelten Blechbands (2), im Rahmen dessen
• das von dem Coil (3) abgewickelte Blechband (2) mittels einer Vorschubvorrichtung (4) in einer von dem Coil (3) weg weisenden Vorschubrichtung (5) in einer Längsrichtung des Blechbands (2) bewegt wird, wobei die Vorschubvorrichtung (4) dem Coil (3) in der Vorschubrichtung (5) nachgeordnet ist und
• das von dem Coil (3) abgewickelte Blechband (2) mittels der Vorschubvorrichtung (4) einer Bearbeitungsvorrichtung (11), welche dem Coil (3) in der Vorschubrichtung (5) des von dem Coil (3) abgewickelten Blechbands (2) nachgeordnet ist, mit einer Bewegung des Blechbands (2) in der Vorschubrichtung (5) zugeführt wird, wobei die Bearbeitungsvorrichtung (11) ausgebildet ist zur Bearbeitung des von dem Coil (3) abgewickelten Blechbands (2) über eine definierte Bearbeitungslänge des Blechbands (2),
• wobei in der Vorschubrichtung (5) zwischen dem Coil (3) und der Bearbeitungsvorrichtung (11) an der dem Coil (3) zugewandten Seite der Vorschubvorrichtung (4) eine von einer betätigbaren Trennvorrichtung (13) ausgebildete Trennstelle (14) vorgesehen wird, die von dem von dem Coil (3) abgewickelten und mittels der Vorschubvorrichtung (4) in der Vorschubrichtung (5) bewegten Blechband (2) zu der Bearbeitungsvorrichtung (11) hin passiert wird,
**dadurch gekennzeichnet,**
• **dass** mittels einer Messvorrichtung (15) fortlaufend eine momentane Bandlänge des Blechbands (2) gemessen wird, mit welcher das Blechband (2) zu dem jeweiligen Messzeitpunkt die Trennstelle (14) der Trennvorrichtung (13) zu der Bearbeitungsvorrichtung (11) hin passiert hat,
• **dass** mittels einer Vergleichsvorrichtung (18) fortlaufend die momentane Bandlänge des Blechbands (2) mit der Bearbeitungslänge des Blechbands (2) verglichen wird und
• **dass** die Trennvorrichtung (13) zum Trennen des Blechbands (2) betätigt und dadurch das Blechband (2) an der Trennstelle (14) getrennt wird, sobald die Vergleichsvorrichtung (18) eine Übereinstimmung der momentanen Bandlänge des Blechbands (2) mit der Bearbeitungslänge des Blechbands (2) festgestellt hat.

## Claims

1. A mechanical arrangement for processing a sheet-metal strip (2) unwound from a coil (3),
• having a feed device (4) by means of which the sheet-metal strip (2) unwound from the coil (3) can be moved in a feed direction (5) away from the coil (3) in a longitudinal direction of the sheet-metal strip (2) and which is arranged downstream of the coil (3) in the feed direction (5) and
• having a processing device (11) arranged downstream of the coil (3) in the feed direction (5) of the sheet-metal strip (2) unwound from the coil (3), to which the sheet-metal strip (2) unwound from the coil (3) can be fed by means of the feed device (4) with a movement of the sheet-metal strip (2) in the feed direction (5) and which is designed for processing the sheet-metal strip (2) unwound from the coil (3) over a defined processing length of the sheet-metal strip (2),
• wherein, in the feed direction (5) between the coil (3) and the processing device (11) on the side of the feed device (4) facing the coil (3), a separating point (14) formed by an actuable separating device (13) is provided, which separating point is passable from the sheet-metal strip (2) unwound from the coil (3) and moved in the feed direction (5) to the processing device (11) by means of the feed device (4) and at which separating point the sheet-metal strip (2) unwound from the coil (3) can be separated by actuating the separating device (13),
**characterized in that**
• a measuring device (15) is provided, by means of which an instantaneous strip length of the sheet-metal strip (2) can be continuously measured, with which the sheet-metal strip (2) has passed the separating point (14) of the separating device (13) in the direction of the processing device (11) at the respective measuring time,
• a comparison device (18) is provided by means of which the instantaneous strip length of the sheet-metal strip (2) is continuously compared with the processing length of the sheet-metal strip (2) and
• the separating device (13) for separating the sheet-metal strip (2) is operable so as to thereby separate the sheet-metal strip (2) at the separating point as soon as the comparison device (18) has determined that the instantaneous strip length of the sheet-metal strip (2) corresponds to the processing length of the sheet-metal strip (2).

2. The mechanical arrangement according to claim 1, **characterized in that**
• a functional unit (8) of the machine arrangement is provided in the feed direction (5) between the coil (3) and the processing device (11), which functional unit mechanically stresses the sheet-metal strip (2) moving in the feed direction (5) and
• the separating point (14) of the separating device (13) is provided in the feed direction between the coil (3) and the functional unit (8) of the machine arrangement that mechanically stresses the sheet-metal strip (2).

3. The mechanical arrangement according to either one of the preceding claims, **characterized in that** the separating point (14) of the separating device (13) is immediately downstream of the coil (3) in the feed direction (5).

4. The mechanical arrangement according to any one of the preceding claims, **characterized in that** a fixing device (22) is provided, by means of which, after the separation of the sheet-metal strip (2), an end of the sheet-metal strip (2) protruding from a remaining coil can be placed against the remaining coil on the coil side.

5. The mechanical arrangement according to any one of the preceding claims, **characterized in that** separating shears are provided as the separating device (13).

6. The mechanical arrangement according to any one of the preceding claims, **characterized in that**
• the feed device (4) can be switched by actuating a switching device (19) and
• the feed device (4) can be stopped by actuating the switching device (19) as soon as the comparison device (18) has determined that the instantaneous strip length of the sheet-metal strip (2) corresponds to the processing length of the sheet-metal strip (2) and before the separating device (13) is actuated to separate the sheet-metal strip (2).

7. The mechanical arrangement according to any one of the preceding claims, **characterized in that**
• the processing length of the sheet-metal strip (2) can be fed to the processing device (11) in sections in the form of strip sections by means of the feed device (4) and
• the instantaneous strip length of the sheet-metal strip (2) can be continuously measured by means of the measuring device (15) as the instantaneous sum of the lengths of the strip sections with which the sheet-metal strip (2) has passed the separating point (14) of the separating device (13) in the feed direction (5) in the direction of the processing device (11) at the respective measuring time.

8. The mechanical arrangement according to any one of the preceding claims, **characterized in that** a programmable numerical arrangement control (16) is provided in which the processing length of the sheet-metal strip (2) is preferably variably stored and which has:
• a measuring unit provided as a measuring device (15) by means of which the instantaneous strip length of the sheet-metal strip (2) can be continuously measured at the respective measuring time,
• a comparison unit provided as a comparison device (18) and connected to the measuring unit, which has access to the processing length of the sheet-metal strip (2) stored in the numerical arrangement control (1) and by means of which the instantaneous strip length of the sheet-metal strip (2) is continuously comparable with the processing length of the sheet-metal strip (2) and
• a control unit (19) connected to the comparison unit, by means of which the separating device (13) can be actuated for separating the sheet-metal strip (2) as soon as the comparison unit has determined that the instantaneous strip length of the sheet-metal strip (2) corresponds to the processing length of the sheet-metal strip (2).

9. A method for processing a sheet-metal strip (2) unwound from a coil (3), the method comprising
• moving the sheet-metal strip (2) unwound from the coil (3) by means of a feed device (4) in a feed direction (5) away from the coil (3) in a longitudinal direction of the sheet-metal strip (2), wherein the feed device (4) is arranged downstream of the coil (3) in the feed direction (5) and
• feeding the sheet-metal strip (2) unwound from the coil (3) to a processing device (11) by means of the feed device (4), which processing device is arranged downstream of the coil (3) in the feed direction (5) of the sheet-metal strip unwound from the coil (3), and moving the sheet-metal strip (2) in the feed direction (5), wherein the processing device (11) is designed to process the sheet-metal strip (2) unwound from the coil (3) over a defined processing length of the sheet-metal strip (2),
• wherein, in the feed direction (5) between the coil (3) and the processing device (11) on the side of the feed device (4) facing the coil (3), a separating point (14) formed by an actuable separating device (13) is provided, which separating point is passed by the sheet-metal strip (2) unwound from the coil and moved in the feed direction (5) to the processing device (11) by means of the feed device (4),
**characterized in that**
• an instantaneous strip length of the sheet-metal strip (2) is continuously measured by means of a measuring device (15) with which the sheet-metal strip (2) has passed the separating point (14) of the separating device (13) in the direction of the processing device (11) at the respective measuring time,
• the instantaneous strip length of the sheet-metal strip (2) is continuously compared with the processing length of the sheet-metal strip (2) by means of a comparison device (18) and
• the separating device (13) is actuated to separate the sheet-metal strip (2) and thereby the sheet-metal strip (2) is separated at the separating point (14) as soon as the comparison device (18) has determined that the instantaneous strip length of the sheet-metal strip (2) corresponds to the processing length of the sheet-metal strip (2).

## Revendications

1. Agencement mécanique permettant de traiter une bande de tôle (2) déroulée d'une bobine (3),
• comportant un dispositif d'avancement (4) par le biais duquel la bande de tôle (2) déroulée de la bobine (3) peut être déplacée dans une direction d'avancement (5) orientée à l'opposé de la bobine (3) dans une direction longitudinale de la bande de tôle (2) et lequel est agencé en aval de la bobine (3) dans la direction d'avancement (5) ainsi que
• comportant un dispositif de traitement (11) agencé en aval de la bobine (3) dans la direction d'avancement (5) de la bande de tôle (2) déroulée de la bobine (3), auquel la bande de tôle (2) déroulée de la bobine (3) peut être alimentée par le biais du dispositif d'avancement (4) avec un mouvement de la bande de tôle (2) dans la direction d'avancement (5) et lequel est réalisé pour traiter la bande de tôle (2) déroulée de la bobine (3) sur une longueur de traitement définie de la bande de tôle (2),
• dans lequel, dans la direction d'avancement (5) entre la bobine (3) et le dispositif de traitement (11), sur la face du dispositif d'avancement (4) tournée vers la bobine (3), un point de coupe (14) réalisé par un dispositif de coupe (13) actionnable est prévu, lequel point est franchissable par la bande de tôle (2) déroulée de la bobine (3) et déplacée par le biais du dispositif d'avancement (4) dans la direction d'avancement (5) vers le dispositif de traitement (11) et auquel point la bande de tôle (2) déroulée de la bobine (3) peut être coupée par actionnement du dispositif de coupe (13),
**caractérisé en ce**
• **qu'**un dispositif de mesure (15) est prévu, par le biais duquel une longueur de bande instantanée de la bande de tôle (2) est mesurable en continu, à laquelle la bande de tôle (2), au moment de mesure respectif, a franchi le point de coupe (14) du dispositif de coupe (13) vers le dispositif de traitement (11),
• **qu'**un dispositif de comparaison (18) est prévu, par le biais duquel la longueur de bande instantanée de la bande de tôle (2) est comparable en continu à la longueur de traitement de la bande de tôle (2) et
• **que** le dispositif de coupe (13) est actionnable pour couper la bande de tôle (2) et la bande de tôle (2) peut ainsi être coupée au point de coupe dès que le dispositif de comparaison (18) a déterminé une correspondance de la longueur de bande instantanée de la bande de tôle (2) avec la longueur de traitement de la bande de tôle (2).

2. Agencement mécanique selon la revendication 1, **caractérisé en ce**
• **que** dans la direction d'avancement (5) entre la bobine (3) et le dispositif de traitement (11), une unité fonctionnelle (8) de l'agencement mécanique est prévue, laquelle exerce une contrainte mécanique sur la bande de tôle (2) se déplaçant dans la direction d'avancement (5) et
• **que** le point de coupe (14) du dispositif de coupe (13) est prévu dans la direction d'avancement entre la bobine (3) et l'unité fonctionnelle (8) de l'agencement mécanique, exerçant une contrainte mécanique sur la bande de tôle (2).

3. Agencement mécanique selon l'une quelconque des revendications précédentes, **caractérisé en ce que** le point de coupe (14) du dispositif de coupe (13) est agencé directement en aval de la bobine (3) dans la direction d'avancement (5).

4. Agencement mécanique selon l'une quelconque des revendications précédentes, **caractérisé en ce qu'**un dispositif de fixation (22) est prévu, par le biais duquel, après la coupe de la bande de tôle (2), côté bobine, une extrémité de la bande de tôle (2) faisant saillie de la bobine restante peut être appliquée à la bobine restante.

5. Agencement mécanique selon l'une quelconque des revendications précédentes, **caractérisé en ce qu'**une cisaille est fournie en tant que dispositif de coupe (13).

6. Agencement mécanique selon l'une quelconque des revendications précédentes, **caractérisé en ce**
• **que** le dispositif d'avancement (4) peut être commuté par actionnement d'un dispositif de commutation (19) et
• **que** le dispositif d'avancement (4) peut être arrêté par actionnement du dispositif de commutation (19) dès que le dispositif de comparaison (18) a déterminé une correspondance de la longueur de bande instantanée de la bande de tôle (2) avec la longueur de traitement de la bande de tôle (2) et avant l'actionnement du dispositif de coupe (13) pour couper la bande de tôle (2).

7. Agencement mécanique selon l'une quelconque des revendications précédentes, **caractérisé en ce**
• **que** la longueur de traitement de la bande de tôle (2) peut être alimentée section par section sous forme de sections de bande par le biais du dispositif d'avancement (4) au dispositif de traitement (11) et
• **que** la longueur de bande instantanée de la bande de tôle (2) peut être mesurée en continu par le biais du dispositif de mesure (15) en tant que somme instantanée des longueurs des sections de bande avec lesquelles la bande de tôle (2) a franchi le point de coupe (14) du dispositif de coupe (13) dans la direction d'avancement (5) vers le dispositif de traitement (11) au moment de mesure respectif.

8. Agencement mécanique selon l'une quelconque des revendications précédentes, **caractérisé en ce qu'**une commande d'agencement (16) numérique programmable est prévue, dans laquelle la longueur de traitement de la bande de tôle (2) est mémorisée, de préférence de manière variable et laquelle présente :
• une unité de mesure prévue sous la forme du dispositif de mesure (15) par le biais duquel la longueur de bande instantanée de la bande de tôle (2) peut être mesurée en continu au moment de mesure respectif,
• une unité de comparaison prévue sous la forme du dispositif de comparaison (18) et connectée à l'unité de mesure, laquelle a accès à la longueur de traitement de la bande de tôle (2) mémorisée dans la commande d'agencement (1) numérique et par le biais de laquelle la longueur de bande instantanée de la bande de tôle (2) est comparable en continu à la longueur de traitement de la bande de tôle (2) et
• une unité de commande (19) connectée à l'unité de comparaison, par le biais de laquelle le dispositif de coupe (13) peut être actionné pour couper la bande de tôle (2) dès que l'unité de comparaison a détecté une correspondance de la longueur de bande instantanée de la bande de tôle (2) avec la longueur de traitement de la bande de tôle (2).

9. Procédé de traitement d'une bande de tôle (2) déroulée d'une bobine (3), dans le cadre duquel
• la bande de tôle (2) déroulée de la bobine (3) est déplacée par le biais d'un dispositif d'avancement (4) dans une direction d'avancement (5) orientée à l'opposé de la bobine (3) dans une direction longitudinale de la bande de tôle (2), dans lequel le dispositif d'avancement (4) est agencé en aval de la bobine (3) dans la direction d'avancement (5) et
• la bande de tôle (2) déroulée de la bobine (3) est alimentée par le biais du dispositif d'avancement (4) à un dispositif de traitement (11), lequel est agencé en aval de la bobine (3) dans la direction d'avancement (5) de la bande de tôle déroulée de la bobine (3), avec un mouvement de la bande de tôle (2) dans la direction d'avancement (5), dans lequel le dispositif de traitement (11) est réalisé pour traiter la bande de tôle (2) déroulée de la bobine (3) sur une longueur de traitement définie de la bande de tôle (2),
• dans lequel, dans la direction d'avancement (5) entre la bobine (3) et le dispositif de traitement (11), sur la face du dispositif d'avancement (4) tournée vers la bobine (3), un point de coupe (14) réalisé par un dispositif de coupe (13) actionnable est prévu, lequel point est franchissable par la bande de tôle (2) déroulée de la bobine et déplacée par le biais du dispositif d'avancement (4) dans la direction d'avancement (5) vers le dispositif de traitement (11),
**caractérisé en ce**
• **que** par le biais d'un dispositif de mesure (15), une longueur de bande instantanée de la bande de tôle (2) est mesurée en continu, à laquelle la bande de tôle (2), au moment de mesure respectif, a franchi le point de coupe (14) du dispositif de coupe (13) vers le dispositif de traitement (11),
• **que** par le biais d'un dispositif de comparaison (18), la longueur de bande instantanée de la bande de tôle (2) est comparée en continu à la longueur de traitement de la bande de tôle (2) et
• **que** le dispositif de coupe (13) est actionné pour couper la bande de tôle (2) et la bande de tôle (2) est ainsi coupée au point de coupe (14) dès que le dispositif de comparaison (18) a déterminé une correspondance de la longueur instantanée de la bande de tôle (2) avec la longueur de traitement de la bande de tôle (2).
